# EUROPEAN PATENT SPECIFICATION

(11) **EP 4 074 901 B1**
(45) Date of publication and mention of the grant of the patent: **13.09.2023**
(21) Application number: 22163933.9
(22) Date of filing: 23.03.2022
(51) Int. Cl.: E03B 3/40, B65G 5/00, E02B 3/00, E03B 11/14, E03F 5/10, A01G 25/00, A62C 3/00, E03B 3/02, E03B 3/03, E03B 3/30

(54) **AN ARRANGEMENT OF DEVICES FOR UNDERGROUND STORAGE OF WATER AND FOR ITS RECOVERY**
ANORDNUNG VON VORRICHTUNGEN ZUM UNTERIRDISCHEN LAGERN VON WASSER UND FÜR DESSEN RÜCKGEWINNUNG
AGENCEMENT DE DISPOSITIFS DE STOCKAGE SOUTERRAIN D'EAU ET SON PROCÉDÉ DE RÉCUPÉRATION

(30) Priority: 24.03.2021 PL 43738721
(43) Date of publication of application: 19.10.2022
(73) Proprietor: Akademia Gorniczo-Hutnicza im. Stanislawa Staszica w Krakowie, 30-059 Krakow (PL)
(72) Inventor: Solecki, Marek, 30-698 Kraków (PL); Solecki, Tadeusz, 30-638 Kraków (PL); Stopa, Jerzy, 31-235 Kraków (PL); Wisniowski, Rafal, 30-698 Kraków (PL); Chruszcz-Lipska, Katarzyna, 34-120 Inwald (PL)
(74) Representative: Wroblewski, Marcin Jan

(56) References cited:
- US-A1- 2008 072 968
- US-A1- 2008 073 087
- US-A1- 2009 173 142

## Description

### Technical field

The object of the invention is an arrangement of devices for underground storage of water and for its recovery, especially useful in areas affected by hydrogeological drought, for retention of water from precipitation, melting, drainage or originating from natural sources for its later use, e.g. in agriculture and horticulture, as well as for water supply in fire protection systems, as backup water abstraction points in the event of an ecological disaster preventing the use of current systems providing water for drinking and for domestic purposes.

### Description of prior art

There are known methods of discharging water from precipitation, melting or drainage to natural permeable layers, involving the use of drain wells or other systems dispersing water in a permeable layer, where the water is not retained for a long time in an aquifer, since it flows to lower drainage areas.

There are also known systems of accumulating water from precipitation and melting below the ground surface in reservoirs made of various prefabricated elements. For example, the underground rainwater storage disclosed in the American patent application US20140105684A1 constitutes a space filled with an assembly of modular units with a cuboidal shape, in which open walls enable the flow of water between the modules, while external modules have sealing walls in places of contact with the surrounding rock mass. Moreover, selected modules have inspection channels extending to the surface, and the water is supplied to the storage and recovered from it via inflow and outflow spigots formed in the modular elements. A similar modular construction for underground storage of rainwater and other fluids is known from the American patent US10151096B2.

From the American patent US8074670B2 there is a known underground water reservoir, formed in water-permeable alluvial sediments, sand or gravel, by outlining a part thereof by means of impermeable walls from the surface to a depth lying below the top of an impermeable substratum. The water level maintained in the reservoir is higher than in the surrounding layer, such that water is supplied to the reservoir from the surrounding aquifer via a supply system provided with a pump and a valve on the side of a higher groundwater table level, and its surplus can be discharged to the aquifer via an overflow discharge system on the side of a lower groundwater table level. In the area of the reservoir there are drilled vertical recovery openings, usually reaching to the bottom of the reservoir, by means of which water is acquired from the reservoir. A further underground water retention pond is known from American patent application US2009173142A. This document is considered as the closest prior art. Similar constructions of underground water retention ponds in the areas of alluvial plains have been disclosed in other American patents: US6840710B2 and US7192218B2.

### Summary of the invention

The invention solves the technical problem of underground storage of large volumes of water, especially rainwater and meltwater, upon its prior purification from mechanical contaminants, preventing siltation of the reservoir, as well as its management in areas poor in natural water sources.

The essence of the arrangement of devices for underground storage of water and for its recovery, comprising an underground retention pond, constituting the volume of a natural water-permeable layer lying on an impermeable substratum, separated from the water-permeable layer by means of an impermeable anti-filtration barrier, formed from the land surface to a depth below the bottom of the water-permeable layer, with a substantially vertical inclination of the walls, forming a closed shape in a horizontal cross-section, as well as comprising a supply installation and a water recovery installation, is in that the water supply installation is constituted by at least one slot trench, formed inside the underground retention pond, filled with a water-permeable material, on which there is a water distribution collector, made of modular boxes with perforated bottoms, filled in the near-bottom part with a filtration material, resting on a deposit of the water-permeable material, so that their perforated bottoms abut the deposit of the water-permeable material, and having perforations in walls abutting the neighbouring boxes. Moreover, the essence of the invention is in that the water distribution collector is connected to a water supply collector via an controllable water inflow adjustment element, while the water recovery installation constitutes at least one recovery well, situated in the slot trench, in which recovery well there is a recovery pump connected to a recovery pipeline and having a signal connection in a wired manner to a control and measurement apparatus, which also has a signal connection in a wired or wireless manner to a controllable water inflow adjustment element and a maximum water level probe placed in the water distribution collector. The essence of the invention is also in that in the area of the underground retention pond there is at least one piezometer well, provided with a submersible pressure gage and a permitted water level probe, which also have a signal connection in a wired or wireless manner to the control and measurement apparatus, which also has a signal connection in a wired or wireless manner to probes monitoring the water level in the recovery well.

It is preferable when the separated volume of the natural water-permeable layer constituting the underground retention pond has the shape of a circle or an ellipse in a horizontal cross-section.

It is also preferable when the natural water-permeable layer is constituted by sand or gravel.

It is further preferable when the slot trench is formed inside the underground retention pond, along its diameter.

It is preferable when the water-permeable material filling the slot trench constitutes gravel, expanded clay or synthetic granules made of polyvinyl chloride (PVC), polypropylene (PP), polyethylene (PE) or glass. It is preferable when the piezometer well is located on the axial direction of the supply collector.

Moreover, it is preferable when the distance of the piezometer well from the anti-filtration barrier is no less than 1/3 of the distance of the anti-filtration barrier from the recovery well.

Under the conditions of a poorly permeable or impermeable layer lying on the natural water-permeable layer, it is preferable when the underground retention pond comprises additional bleeding and venting elements, and it is especially preferable when the bleeding and venting elements are constituted by a layer of a natural permeable material, which constitutes gravel, or a layer of synthetic granules made of polyvinyl chloride (PVC), polypropylene (PP), polyethylene (PE), expanded clay or glass, surrounded by a geotextile, situated in segments in the upper part of the anti-filtration barrier, constituting a ventilation connection of the underground retention pond with the atmosphere, or when the bleeding and venting elements constitute openings extending through the poorly permeable or impermeable layer, forming a ventilation connection of the underground retention pond to the atmosphere.

It is preferable when the area of surface above the underground retention pond is covered by a soil layer, which allows for ensuring the biological function of this area.

It is preferable when the filtration material constitutes a sponge or a geotextile or a coir mat, arranged in layers on the whole bottom surface of the boxes forming the water distribution collector.

### Brief description of drawings

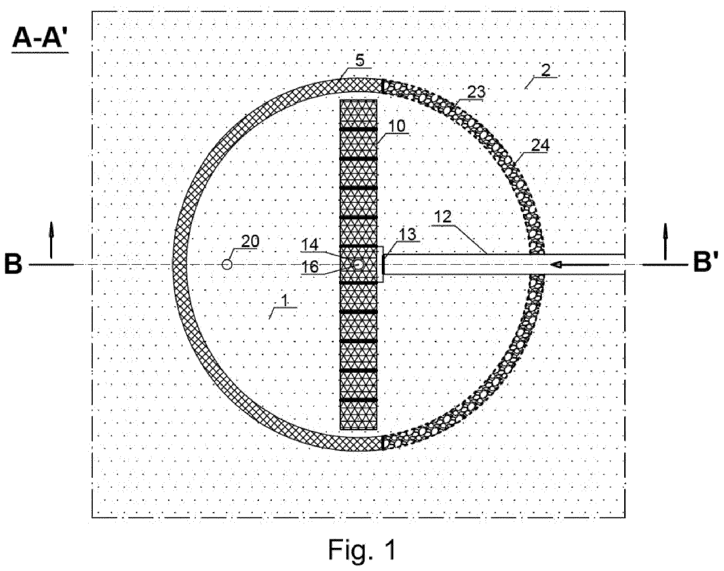

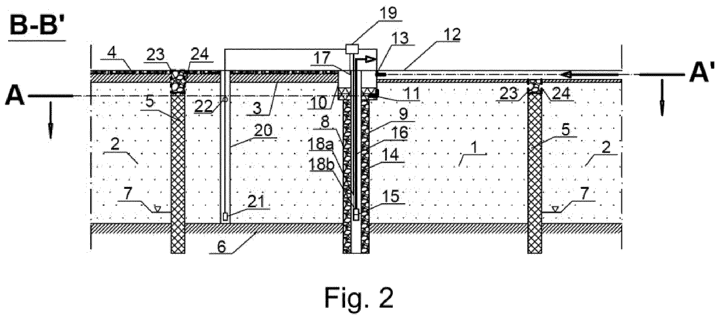

The object of the invention is presented in an embodiment in the drawing, in which fig. 1 presents a schematic view of the underground retention pond in a broken horizontal cross-section AA', while fig. 2 - in a vertical cross-section B-B'.

### Detailed description of the invention

### Embodiment 1

The arrangement of devices for underground storage of water and for its recovery comprises an underground water retention pond 1, formed in a natural water-permeable layer 2 with average thickness of 20 metres, which is constituted by coarse sand, lying on an impermeable substratum 6 and placed under a natural poorly permeable or impermeable layer 3, which is constituted by tills with a soil layer 4 lying thereon. The underground water retention pond 1 constitutes a volume of pore spaces formed between sand grains, separated in the permeable layer 2 by a vertical anti-filtration barrier 5 in the shape of a ring with a diameter of 60 m, so that in a horizontal cross-section the underground retention pond 1 has the shape of a circle. The anti-filtration barrier 5 is formed in the water-permeable layer 2, and it is sunk by approx. 1 m into an impermeable substratum 6. In the natural water-permeable layer 2 there is a groundwater table 7, during a hydrogeological drought placed in the lower part of this layer. Inside the underground retention pond 1 there is a slot trench 8 with a width of 0.8 m, formed along the diameter of the retention pond 1 from the top surface of the water-permeable layer 2 to its bottom. The slot trench 8 is filled with a water-permeable material 9 which constitutes a gravel deposit. Surrounding the partially perforated casing string of a recovery well 14, situated in the central part of the underground retention pond 1, a part of the gravel deposit is sunk 1 m into the impermeable substratum 6. In the upper part of the slot trench 8, directly above the gravel deposit, there is a water distribution collector 10, made of modular boxes with perforated bottoms, resting on the water-permeable material 9, and with perforated walls in the part abutting other boxes. The boxes of the water distribution collector 10 in the near-bottom part are filled with a filtration material 11, which is constituted by plates of filtration sponge, stacked one above the other and covering the entire bottom surface of the boxes. The water distribution collector 10 is connected to a supply collector 12 via an inflow adjustment element 13, which constitutes a moving weir, provided with a controllable mechanism adjusting the inflow of water into the collector. In the slot trench 8 there is a partially perforated casing string of a recovery well 14, in which a recovery pump 15 is placed and connected to a recovery pipeline 16. In the water distribution collector 10 there is a maximum water level probe 17, and inside the perforated casing string of the recovery well 14 there is a multi-core cable with probes 18a and 18b monitoring the water level in the recovery well 14, connected to a control and measurement apparatus 19 on the surface, which is further connected by means of signal wires to a mechanism adjusting the height of the moving weir, being the water inflow adjustment element 13, and to the recovery pump 15. At a distance of 1/3 of the radius from the vertical anti-filtration barrier 5, on the axial direction of the supply collector 12 there is a piezometer well 20, provided with a submersible pressure gage 21 and provided with a permitted water level probe 22. In the upper part of the vertical anti-filtration barrier 5 there are bleeding and venting elements 23, which are constituted by gravel with layer thickness of 0.5 m, surrounded by a geotextile 24, providing a ventilation connection of the underground pond 1 to the atmosphere through the poorly permeable or impermeable layer 3 and the soil layer 4.

### Embodiment 2

In another embodiment, the water retention pond 1 has been delimited in a natural water-permeable layer 2, which is constituted by a 5 m layer of a mixture of gravel with coarse sand and a 20-metre layer of fine sand lying thereon, on which in turn lies a poorly permeable or impermeable layer 3, which is constituted by tills, covered by a soil layer 4 on the surface. The underground retention pond 1 with a horizontal cross-section in the shape of an ellipse has two perpendicular slot trenches, formed to a depth of 4 metres, partially sunk into the gravel and sand layer, filled with a water-permeable material 9, which is constituted by synthetic granules, constituting a mixture of polypropylene PP and glass granules. The slot trenches are provided at the top with modular boxes with perforated bottoms and perforated walls in the part abutting each other, in the near-bottom part filled with a filtration material 11, which is constituted by alternating layers of sponge and coir mat, additionally reinforced from the outside by a geotextile. A water supply collector 12 and a piezometer well 20 are situated on the direction of the bisector between the directions of perpendicular slot trenches 8. Moreover, an element 13 adjusting the inflow of water into the water distribution collector 10 constitutes a controllable valve having a signal connection in a wired manner to a control and measurement apparatus 19.

### Embodiment 3

In yet another embodiment of the invention, an underground retention pond 1 has been formed in a water-permeable layer 2 of sand, on which lie poorly permeable and impermeable layers 3. Under these conditions, the underground retention pond 1 in its upper part additionally comprises bleeding and venting elements 23, which are constituted by a natural permeable material in the form of a gravel layer, surrounded by a geotextile 24, lying in segments on an anti-filtration barrier 5. The retention pond 1 comprises three columns of partially perforated casing strings of a recovery well 14, also being provided with recovery pumps 15 connected to a recovery pipeline 16, as well as with probes 18a and 18b monitoring the water level of the recovery well 14. A slot trench 8 is filled with a water-permeable material 9, which is constituted by a mixture of expanded clay and polyethylene granules.

### Embodiment 4

In other embodiment of the invention, the permeable material is constituted by a mixture of synthetic granules of PCV and PP with glass, surrounded by a geotextile 24, and moreover the bleeding and venting element is constituted by a grid of wells extending through natural poorly permeable and impermeable layers 3, lying above a natural water-permeable layer 2, which wells constitute a ventilation connection of the underground retention pond 1 to the atmosphere.

### Embodiment 5

In yet another embodiment of the invention, the slot trench 8 is filled with a water-permeable material 9, which is constituted by a mixture of PVC granules and expanded clay, while a permeable material 23, serving the function of a bleeding and venting element, surrounded by a geotextile 24, constituting a mixture of polyethylene and expanded clay granules, lies in the upper part of a vertical anti-filtration barrier 5.

### Further description of the invention

The operation of the arrangement of devices for underground storage of water and for its recovery according to the invention involves supplying water purified from mechanical contaminants by a supply collector 12 to a water distribution collector 10, in which it is ultimately filtered on afiltration material 11, which constitutes the final element of trapping mechanical contaminants, preventing the process of siltation of the gravel deposit. In the water distribution collector 10 there is a maximum water level probe 17, and inside the perforated casing string of a recovery well 15 there is a multi-core cable with water level probes 18a, 18b, cooperating with a control and measurement apparatus 19, which controls the water level in the water distribution collector 10 and, if needed, controls an inflow adjustment element 13 so as to increase or decrease the inflow of water into the water distribution collector 10, and moreover controls a recovery pump 15 during the process of recovering water from the underground retention pond 1. A submersible pressure gage 21 in a piezometer well 20 enables tracing the water level in the underground retention pond 1 being filled, and a permitted water level probe 22 placed in the piezometer well 20 prevents overfilling the underground retention pond 1. The anti-filtration barrier 5 prevents the stored water from spreading, and maintains it at a level higher than the groundwater level 7 in the natural water-permeable layer 2, while a permeable material, surrounded by a geotextile 24, in the upper part of the anti-filtration barrier 5 enables the flow and exchange of air between the pore space in the soil and the atmosphere when filling and emptying the underground water retention pond 1.

### Key to reference numerals in fig. 1 and fig. 2:

1. underground pond
2. natural water-permeable layer
3. natural poorly permeable or impermeable layer
4. soil layer
5. vertical anti-filtration barrier
6. impermeable substratum
7. groundwater table
8. slot trench
9. water-permeable material
10. distribution collector
11. filtration material
12. supply collector
13. inflow adjustment element
14. recovery well
15. recovery pump
16. recovery pipeline
17. maximum water level probe
18. (18a, 18b) probes
19. control and measurement apparatus
20. piezometer well
21. submersible pressure gage
22. permitted water level probe
23. bleeding and venting element
24. geotextile

## Claims

1. An arrangement of devices for underground storage of water and for its recovery, comprising an underground retention pond (1), constituting the volume of a natural water-permeable layer (2), lying on an impermeable substratum (6), the pond (1) being separated from water-permeable layer by means of an impermeable anti-filtration barrier (5), made from the ground surface to a depth below the bottom of the water-permeable layer, with a substantially vertical inclination of walls, forming a closed shape in a horizontal cross-section, the arrangement of devices further comprising a supply installation and a water recovery installation, the water supply installation is constituted by at least one slot trench (8), formed inside the underground retention pond (1) and filled with a water-permeable material (9), **characterised in that** on the slot trench there is a water distribution collector (10), made of modular boxes with perforated bottoms, the modular boxes filled in the near-bottom part with a filtration material (11), lying on a deposit of the water-permeable material (9), so that their perforated bottoms abut the deposit of the water-permeable material (9), and the modular boxes having perforations in walls abutting the neighbouring boxes, and moreover the water distribution collector (10) is connected to a water supply collector (12) via a controllable water inflow adjustment element (13), while the water recovery installation comprises at least one recovery well (14), situated in the slot trench (8), in which recovery well (14) there is a recovery pump (15), connected to a recovery pipeline (16) and having a signal connection in a wired manner to a control and measurement apparatus (19), which also has a signal connection in a wired or wireless manner to the controllable water inflow adjustment element (13) and a maximum water level probe (17), located in the water distribution collector (10), and moreover, in the area of the underground retention pond (1), there is at least one piezometer well (20), provided with a submersible pressure gage (21) and a permitted water level probe (22), which also have a signal connection in a wired or wireless manner to the control and measurement apparatus (19), which control and measurement apparatus (19) also has a signal connection in a wired or wireless manner to probes (18a, 18b) monitoring the water level in the recovery well (14).

2. The arrangement of devices according to claim 1, **characterised in that** a separated volume of the natural water-permeable layer (2) constituting the underground retention pond (1) has the shape of a circle or an ellipse in a horizontal cross-section.

3. The arrangement of devices according to claim 1, **characterised in that** the natural water-permeable layer (2) is constituted by sand or gravel.

4. The arrangement of devices according to claim 1, **characterised in that** the slot trench (8) is formed inside the underground retention pond (1), along its diameter.

5. The arrangement of devices according to claim 1, **characterised in that** the water-permeable material (9) filling the slot trench (8) constitutes gravel, expanded clay or synthetic granules made of PCV, PP, PE or glass.

6. The arrangement of devices according to claim 1, **characterised in that** the piezometer well (20) is located on the axial direction of the supply collector (12).

7. The arrangement of devices according to claim 1, **characterised in that** the distance of the piezometer well (20) from the anti-filtration barrier (5) is no less than 1/3 of the distance of the anti-filtration barrier (5) from the recovery well (14).

8. The arrangement of devices according to claim 1, **characterised in that** under the conditions of a poorly permeable or impermeable layer (3) lying on the natural water-permeable layer (2), the underground retention pond (1) comprises additional bleeding and venting elements (23).

9. The arrangement of devices according to claim 8, **characterised in that** the bleeding and venting elements (23) are constituted by a layer of a natural permeable material, which constitutes gravel, or a layer of synthetic granules made of PCV, PP, PE, expanded clay or glass, surrounded by a geotextile (24), situated in segments in the upper part of the anti-filtration barrier (5), constituting a ventilation connection of the underground retention pond (1) to the atmosphere.

10. The arrangement of devices according to claim 8, **characterised in that** the bleeding and venting elements (23) constitute openings, extending through the poorly permeable or impermeable layer (3), constituting a ventilation connection of the underground retention pond (1) to the atmosphere.

11. The arrangement of devices according to claim 1, **characterised in that** the area of surface above the underground retention pond (1) is covered by a soil layer (4).

12. The arrangement of devices according to claim 1, **characterised in that** the filtration material (11) constitutes a sponge or a geotextile or a coir mat, arranged in layers on the whole bottom surface of the boxes forming the water distribution collector (10).

## Patentansprüche

1. Anordnung von Vorrichtungen zur unterirdischen Speicherung von Wasser und zu dessen Rückgewinnung, umfassend einen unterirdischen Rückhaltebecken (1), der das Volumen einer natürlichen wasserdurchlässigen Schicht (2) bildet, die auf einem undurchlässigen Substrat (6) liegt, wobei der Becken (1) von der wasserdurchlässigen Schicht mittels einer undurchlässigen Antifiltrationsbarriere (5) getrennt ist, die von der Bodenoberfläche bis zu einer Tiefe unterhalb des Bodens der wasserdurchlässigen Schicht mit einer im Wesentlichen vertikalen Neigung der Wände hergestellt ist, die eine geschlossene Form in einem horizontalen Querschnitt bilden, die Anordnung von Vorrichtungen außerdem eine Versorgungsanlage und eine Wasserrückgewinnungsanlage umfasst, wobei die Wasserversorgungsanlage durch mindestens einen Schlitzgraben (8) gebildet wird, der im Inneren des unterirdischen Rückhaltebeckens (1) ausgebildet und mit einem wasserdurchlässigen Material (9) gefüllt ist, **dadurch gekennzeichnet, dass** sich auf dem Schlitzgraben ein Wasserverteilungskollektor (10) befindet, der aus modularen Kästen mit perforierten Böden besteht, wobei die modularen Kästen im bodennahen Teil mit einem Filtermaterial (11) gefüllt sind, das auf einer Ablagerung des wasserdurchlässigen Materials (9) liegt, so dass ihre perforierten Böden an der Ablagerung des wasserdurchlässigen Materials (9) anliegen, und die modularen Kästen Perforationen in Wänden aufweisen, die an den benachbarten Kästen anliegen, und außerdem der Wasserverteilungskollektor (10) mit einem Wasserversorgungssammler (12) über ein steuerbares Wasserzuflusseinstellelement (13) verbunden ist, während die Wasserrückgewinnungsanlage mindestens einen Rückgewinnungsschacht (14) umfasst, der sich in dem Schlitzgraben (8) befindet, wobei sich in dem Rückgewinnungsschacht (14) eine Rückgewinnungspumpe (15) befindet, die mit einer Rückgewinnungsleitung (16) verbunden ist und eine Signalverbindung in einer verdrahteten Weise zu einer Steuer- und Messvorrichtung (19) aufweist, die ebenfalls eine drahtgebundene oder drahtlose Signalverbindung zu dem steuerbaren Wasserzuflusseinstellelement (13) und einer im Wasserverteilungskollektor (10) befindlichen Maximalwasserspiegelsonde (17) aufweist, und darüber hinaus im Bereich des unterirdischen Rückhaltebeckens (1) mindestens ein Piezometerbrunnen (20) vorhanden ist, mit einem Tauchmanometer (21) und einer zulässigen Wasserstandsonde (22) versehen ist, die ebenfalls eine drahtgebundene oder drahtlose Signalverbindung mit dem Steuer- und Messgerät (19) aufweisen, wobei das Steuer- und Messgerät (19) ebenfalls eine drahtgebundene oder drahtlose Signalverbindung mit Sonden (18a, 18b) aufweist, die den Wasserstand im Rückgewinnungsschacht (14) überwachen.

2. Vorrichtungsanordnung nach Anspruch 1, **dadurch gekennzeichnet, dass** ein abgetrenntes Volumen der natürlichen wasserdurchlässigen Schicht (2), die den unterirdischen Rückhaltebecken (1) bildet, im horizontalen Querschnitt die Form eines Kreises oder einer Ellipse hat.

3. Vorrichtungsanordnung nach Anspruch 1, **dadurch gekennzeichnet, dass** die natürliche wasserdurchlässige Schicht (2) durch Sand oder Kies gebildet wird.

4. Vorrichtungsanordnung nach Anspruch 1, **dadurch gekennzeichnet, dass** der Schlitzgraben (8) im Inneren des unterirdischen Rückhaltebeckens (1) entlang seines Durchmessers ausgebildet ist.

5. Vorrichtungsanordnung nach Anspruch 1, **dadurch gekennzeichnet, dass** das wasserdurchlässige Material (9), das den Schlitzgraben (8) ausfüllt, aus Kies, Blähton oder Kunststoffgranulat aus PCV, PP, PE oder Glas besteht.

6. Vorrichtungsanordnung nach Anspruch 1, **dadurch gekennzeichnet, dass** die Piezometerbohrung (20) in axialer Richtung des Versorgungssammlers (12) angeordnet ist.

7. Vorrichtungsanordnung nach Anspruch 1, **dadurch gekennzeichnet, dass** der Abstand der Piezometerbohrung (20) von der Antifiltrationsbarriere (5) mindestens 1/3 des Abstandes der Antifiltrationsbarriere (5) von dem Rückgewinnungsschacht (14) beträgt.

8. Vorrichtungsanordnung nach Anspruch 1, **dadurch gekennzeichnet, dass** das unterirdische Rückhaltebecken (1) unter den Bedingungen einer schlecht durchlässigen oder undurchlässigen Schicht (3), die auf der natürlichen wasserdurchlässigen Schicht (2) liegt, zusätzliche Entlüftungs- und Belüftungselemente (23) umfasst.

9. Vorrichtungsanordnung nach Anspruch 8, **dadurch gekennzeichnet, dass** die Entlüftungs- und Belüftungselemente (23) aus einer Schicht aus einem natürlichen durchlässigen Material, das Kies darstellt, oder einer Schicht aus synthetischem Granulat aus PCV, PP, PE, Blähton oder Glas bestehen, die von einem Geotextil (24) umgeben ist, das sich in Segmenten im oberen Teil der Antifiltrationsbarriere (5) befindet und eine Belüftungsverbindung des unterirdischen Rückhaltebeckens (1) mit der Atmosphäre darstellt.

10. Vorrichtungsanordnung nach Anspruch 8, **dadurch gekennzeichnet, dass** die Entlüftungs- und Belüftungselemente (23) Öffnungen darstellen, die sich durch die schlecht durchlässige oder undurchlässige Schicht (3) erstrecken und eine Belüftungsverbindung des unterirdischen Rückhaltebeckens (1) zur Atmosphäre bilden.

11. Vorrichtungsanordnung nach Anspruch 1, **dadurch gekennzeichnet, dass** der Oberflächenbereich oberhalb des unterirdischen Rückhaltebeckens (1) von einer Erdschicht (4) bedeckt ist.

12. Vorrichtungsanordnung nach Anspruch 1, **dadurch gekennzeichnet, dass** das Filtermaterial (11) einen Schwamm oder ein Geotextil oder eine Kokosmatte darstellt, die in Schichten auf der gesamten Bodenfläche der den Wasserverteilungskollektor (10) bildenden Kästen angeordnet sind.

## Revendications

1. Un agencement de dispositifs pour le stockage souterrain de l'eau et pour sa récupération, comprenant un bassin de rétention souterrain (1), constituant le volume d'une couche naturelle perméable à l'eau (2), reposant sur un substrat imperméable (6), le bassin (1) étant séparé de la couche perméable à l'eau au moyen d'une barrière anti-filtration imperméable (5), réalisée depuis la surface du sol jusqu'à une profondeur inférieure au fond de la couche perméable à l'eau, avec une inclinaison sensiblement verticale des parois, présentant une forme fermée dans une section transversale horizontale, l'agencement des dispositifs comprenant en outre une installation d'alimentation et une installation de récupération d'eau, l'installation d'alimentation en eau étant constituée d'au moins une tranchée à fente (8), formée à l'intérieur du bassin de rétention souterrain (1) et remplie d'un matériau perméable à l'eau (9), **caractérisé en ce que** sur la tranchée à fente il y a un collecteur de distribution d'eau (10), réalisé en boîtes modulaires avec des fonds perforés, les boîtes modulaires remplies dans la partie proche du fond avec un matériau de filtration (11), reposant sur un dépôt du matériau perméable à l'eau (9), de sorte que leurs fonds perforés viennent en appui contre le dépôt du matériau perméable à l'eau (9), et les boîtes modulaires ayant des perforations dans les parois venant en appui contre les boîtes voisines, et en outre, le collecteur de distribution d'eau (10) est relié à un collecteur d'alimentation en eau (12) par l'intermédiaire d'un élément de réglage commandé d'arrivée d'eau (13), tandis que l'installation de récupération d'eau comprend au moins un puits de récupération (14), situé dans la tranchée à fente (8), dans lequel le puits de récupération (14) il y a une pompe de récupération (15), reliée à une conduite de récupération (16) et disposant d'une connexion de signal de manière filaire à un appareil de commande et de mesure (19), qui dispose également d'une connexion de signal de manière filaire ou sans fil à l'élément de réglage commandé d'arrivée d'eau (13) et à une sonde de niveau d'eau maximum (17), située dans le collecteur de distribution d'eau (10), et en outre, dans la zone du bassin de rétention souterrain (1), il y a au moins un puits piézométrique (20), équipé d'un manomètre submersible (21) et d'une sonde de niveau d'eau autorisée (22), qui ont également une connexion de signal de manière filaire ou sans fil à l'appareil de commande et de mesure (19), lequel appareil de commande et de mesure (19) a également une connexion de signal de manière filaire ou sans fil aux sondes (18a,18b) surveillant le niveau d'eau dans le puits de récupération (14).

2. L'agencement de dispositifs selon la revendication 1, **caractérisé en ce qu'**un volume séparé de la couche naturelle perméable à l'eau (2) constituant le bassin de rétention souterrain (1) a la forme d'un cercle ou d'une ellipse dans une section transversale horizontale.

3. L'agencement de dispositifs selon la revendication 1, **caractérisé en ce que** la couche naturelle perméable à l'eau (2) est constituée de sable ou de gravier.

4. L'agencement de dispositifs selon la revendication 1, **caractérisé en ce que** la tranchée à fente (8) est formée à l'intérieur du bassin de rétention souterrain (1), le long de son diamètre.

5. L'agencement de dispositifs selon la revendication 1, **caractérisé en ce que** le matériau perméable à l'eau (9) remplissant la tranchée à fente (8) est constitué de gravier, d'argile expansée ou de granulés synthétiques en PCV, PP, PE ou verre.

6. L'agencement de dispositifs selon la revendication 1, **caractérisé en ce que** le puits piézométrique (20) est situé dans la direction axiale du collecteur d'alimentation (12).

7. L'agencement de dispositifs selon la revendication 1, **caractérisé en ce que** la distance du puits piézométrique (20) depuis la barrière anti-filtration (5) n'est pas inférieure à 1/3 de la distance de la barrière anti-filtration (5) depuis le puits de récupération (14).

8. L'agencement de dispositifs selon la revendication 1, **caractérisé en ce que** dans les conditions d'une couche peu perméable ou imperméable (3) reposant sur la couche naturelle perméable à l'eau (2), le bassin de rétention souterrain (1) comprend des éléments de purge et d'aération supplémentaires (23).

9. L'agencement de dispositifs selon la revendication 8, **caractérisé en ce que** les éléments de purge et d'aération (23) sont constitués d'une couche d'un matériau naturel perméable, qui consiste en du gravier, ou d'une couche de granulés synthétiques en PCV, PP, PE, argile expansée ou verre, entourée d'un géotextile (24), située en segments dans la partie supérieure de la barrière anti-filtration (5), constituant une connexion de ventilation du bassin de rétention souterrain (1) à l'atmosphère.

10. L'agencement de dispositifs selon la revendication 8, **caractérisé en ce que** les éléments de purge et d'aération (23) constituent des ouvertures, s'étendant à travers la couche peu perméable ou imperméable (3), constituant une connexion de ventilation du bassin de rétention souterrain (1) à l'atmosphère.

11. L'agencement de dispositifs selon la revendication 1, **caractérisé en ce que** la zone de surface au-dessus du bassin de rétention souterrain (1) est recouverte d'une couche de sol (4).

12. L'agencement de dispositifs selon la revendication 1, **caractérisé en ce que** le matériau de filtration (11) constitue une éponge ou un géotextile, ou une natte de coco, agencé en couches sur toute la surface de fond des boîtes formant le collecteur de distribution d'eau (10).
